# EUROPÄISCHE PATENTSCHRIFT

(11) **EP 3 036 168 B1**
(45) Veröffentlichungstag und Bekanntmachung des Hinweises auf die Patenterteilung: **17.07.2019**
(21) Anmeldenummer: 14752310.4
(22) Anmeldetag: 13.08.2014
(51) Int. Cl.: B65C 9/00, F16P 1/02

(54) **VERKLEIDUNG VON RUNDLÄUFERMASCHINEN MIT PERIPHEREN WECHSELMODULEN**
HOUSING OF ROTARY MACHINES WITH PERIPHERAL MODULES
REVETEMENT DE MACHINES ROTATIFS AVEC DES MODULES PERIPHERIQUES

(30) Priorität: 20.08.2013 DE 102013109004
(43) Veröffentlichungstag der Anmeldung: 29.06.2016
(73) Patentinhaber: KHS GmbH, 44143 Dortmund (DE)
(72) Erfinder: GOLLEK, Hanno, 44287 Dortmund (DE); KRÄMER, Klaus, 44267 Dortmund (DE)
(86) Internationale Anmeldenummer: PCT/EP2014/067373
(87) Internationale Veröffentlichungsnummer: WO 2015/024843

(56) Entgegenhaltungen:
- WO-A1-2010/099822
- WO-A1-2012/019824
- DE-A1-102011 054 890
- US-A- 3 361 189
- Günter Pschorn: "Funktionelle Nanobeschichtung im PET-Bereich", KHS Plasmax , 16. Mai 2011 (2011-05-16), XP002731423, Gefunden im Internet: URL:http://www.innovationsbegleitung.de/na nopackaging/praesentationen/pschorn_plasma x_Interpak_2011-05-16.pdf [gefunden am 2014-10-21]
- OLIVER GRIESING: "Hohe Verfügbarkeit &transparente Betriebskosten", KHS Corpoplast GmbH Getränke!, Bd. 2010, Nr. 04 April 2010 (2010-04), Seiten 20-22, XP002731424, Gefunden im Internet: URL:http://d-nb.info/1007430648/34 [gefunden am 2014-10-21]

## Beschreibung

Die Erfindung betrifft eine Behälterbehandlungsanlage, welche als Rundläufer ausgeführt ist, an deren peripherem Umfang Behandlungsmodule angeordnet sind, um Behälter zu behandeln, wobei zumindest ein im Freiraum zwischen benachbarten Behandlungsmodulen angeordnetes Abschirmelement vorgesehen ist, wobei ferner das Abschirmelement als mehrteilige Verkleidung mit Verkleidungselementen ausgeführt ist, wobei weiter mindestens eines der Verkleidungselemente auf oder an einem der Behandlungsmodule schwenkbar gelagert und hiermit verbunden ist, und wobei ein anderes Verkleidungselement zumindest ein Verbindungselement aufweist, welches mit einem korrespondierenden Gegenverbindungselement zusammenwirkt, welches an der Behälterbehandlungsanlage und/oder an dem anderen direkt benachbarten Behandlungsmodul angeordnet ist.

Behälterbehandlungsanlagen sind in unterschiedlichen Ausführungen, z.B. als Füllmaschinen, Etikettiermaschinen, Inspektionsmaschinen oder Rinser bekannt. Bei einer Etikettiermaschine sind zum Beispiel Behandlungsmodule als Etikettiermodule angeordnet, welche Etiketten an den Behältern anbringen, wobei aber auch Behandlungsmodule als Ausrichtmodule vorgesehen sein können, welche ein Ausrichten der Behälter so bewirken, dass die Etiketten stets gleichorientiert und lageidentisch an den Behältern angebracht werden können. Möglich ist auch, dass mehrere Etikettiermodule vorgesehen sind, von denen eines einen vorderen Bauchbereich, ein anderes einen hinteren Bauchbereich und wieder ein anderes einen Halsbereich mit Etiketten belegt. Nachfolgend können noch Behandlungsmodule als Inspektionsmodule vorgesehen sein, welche die aufgebrachten Etiketten auf korrekte und knickfreie Position und dergleichen kontrolliert. Diese Behandlungsmodule sind nun in Umfangsrichtung des Rundläufers, also des Drehtisches um diesen herum angeordnet.

Eingangs genannte Behälter können beispielsweise als Flaschen für Flüssigkeiten, beispielsweise für Getränke verwendet werden. Die Behälter z.B. Flaaus Glas oder aus einem transluzenten Kunststoff, z.B. PET bestehen. Denkbar ist aber auch, dass die Behälter aus anderen Materialien bestehen und mit anderen Füllgütern befüllbar sind. Als Behälter gelten im Sinne der Erfindung auch Preforms, also Gegenstände, welche noch zu den Behältern geformt werden.

Die EP 1 754 663 A1 thematisiert eine Behandlungsmaschine für Gegenstände. Dabei soll ein möglichst großer Umfangsbereich für die Anordnung unterschiedlicher Behandlungsstationen bei gleichzeitig freier Umfangszuordnung an beliebiger Position eines zugeordneten Drehtisches geschaffen werden. Von daher schlägt die EP 1 754 663 A1 vor, dass der Drehtisch frei von Peripherie umgebenen Stütz- und /oder Bauelementen ausgebildet ist. Die EP 1 754 663 A1 erwähnt auch Abschirmelemente, welche an einem äußeren Ring gehalten sind.

In der DE 203 02 578 U1 ist offenbart, dass die um einen Drehtisch herum angeordneten Behandlungsmodule als austauschbare Einheit ausgeführt sein können.

Das Gebrauchsmuster DE 89 05 839 befasst sich mit einer Etikettiermaschine, bei welcher eine Haube als Abschirmelement höhenverstellbar vorgesehen ist.

Ebenso offenbart die EP 1 449 809 A1 Abschirmelemente, welche als Schutzscheibe heb- und senkbar entlang von Stützen angeordnet sind.

Vergleichbar arbeitet die gattungsbildende WO 2010/099822 A1. Hier geht es um ein Sicherungssystem für eine Behälterbehandlungsanlage, das mit einem Rahmen und Stützstangen am Rahmen ausgerüstet ist. Die jeweilige Stützstange trägt ein Verkleidungselement, welches mit Hilfe eines Stellgliedes zwischen einer geschlossenen und geöffneten Position verschwenkt werden kann. Außerdem sind zusätzliche Hilfsverkleidungselemente realisiert.

Bei der DE 10 2011 054 890 A1 geht es um eine Behälterbehandlungsanlage und Handhabungsvorrichtung. Die Behälterbehandlungsanlage kann mit Wechselautomaten wahlweise ausgerüstet werden. Außerdem ist ein Gehäuse vorgesehen, welches eine durch Sicherheitstüren verschlossene Wechselöffnung aufweist. Bei einem Produktwechsel werden die Sicherheitstüren geöffnet, so dass der Wechselautomat ankuppeln kann.

Schließlich befasst sich die WO 2012/019824 A1 mit einer Etikettiermaschine, die eine umfangsseitige Sicherheitsstruktur aufweist. Die Sicherheitsstruktur weist eine oder mehrere Schwenktüren auf, die mit Hilfe eines Stellantriebes betätigt werden.

Aus der US 3,361,189 ist eine Falttür mit hölzernen Paneelen, die durch flexible Verbindungselemente verbunden sind, bekannt.

Abschirmelemente dienen in aller Regel dazu, dass ein unerwünschtes Eingreifen von Personen in den Bewegungsbereich der Rundläufer vermieden wird. Andernfalls können erhebliche Verletzungsrisiken entstehen. Gleichzeitig schützen die Abschirmelemente vor dem eher seltenen Fall, wenn sich Behälter von dem Rundläufer unerwünschter Weise lösen, und so ggfls. von der Anlage weggeschleudert werden, wobei ebenfalls Personen verletzt werden könnten.

Die Anordnung von Abschirmelementen an den Rundläufern bietet insofern noch Raum für Verbesserungen. Von daher liegt der Erfindung die Aufgabe zugrunde, eine Behälterbehandlungsanlage der eingangs genannten Art anzugeben, welche eine verbesserte Abschirmung aufweist.

Erfindungsgemäß gelingt die Lösung der Aufgabe mit einer Behälterbehandlungsanlage mit den Merkmalen des Anspruchs 1.

Gemäß der Erfindung wird somit eine Behälterbehandlungsanlage angegeben, welche als Rundläufer ausgeführt ist, an deren peripherem Umfang Behandlungsmodule angeordnet sind, um Behälter zu behandeln, wobei zumindest ein Abschirmelement vorgesehen ist. Das Abschirmelement ist als mehrteilige Verkleidung mit Verkleidungselementen ausgeführt.

Die Verkleidung ist in seiner Erstreckung größer ist als ein abzuschirmender Spalt. So weist das Verkleidungselement quasi eine winklige Anordnung der Verkleidungselemente zueinander auf. Dies ist vorteilhaft, da so eine Verkleidung geschaffen ist, welche gewisse Toleranzen hinsichtlich der Einstellbarkeit zur Verfügung stellt. So kann der abzuschirmende Spalt, also der Freiraum zwischen benachbarten Behandlungsmodulen unterschiedliche Dimensionen haben, wobei eine universell einsetzbare Verkleidung geschaffen ist.

Gemäß der Erfindung ist die Verkleidung einseitig schwenkbar an dem Behandlungsmodul angeordnet ist, wobei die Gegenverbindungselemente dann an dem jeweils benachbarten Behandlungsmodul angeordnet sind. So kann der Spalt, also der Freiraum zwischen zwei benachbarten Behandlungsmodulen in einfachster Weise mit der Verkleidung geschlossen werden.

Zur einseitig schwenkbaren Verbindung der Verkleidung mit dem Behandlungsmodul ist es zweckmäßig wenn ein Holm der Verkleidung an dem Behandlungsmodul starr, also fest befestigt, z.B. verschraubt ist. An den Holm schließt sich ein erstes Verkleidungselement an, welches gelenkig mit dem Holm verbindbar ist. Als Gelenk kann ein Gummielement oder eine Gummilippe ausreichend sein oder eine Kombination aus einem oder mehreren mechanisch tragenden Gelenken zur Aufnahme der insb. vertikalen Kräfte zusammen einem schmutzabweisenden und verschließenden leichten Gummielement. Als Variante hierzu ist auch möglich, dass der Holm oder ein vertikales Rahmenelement des ersten Verkleidungselementes gelenkig mit dem Behandlungsmodul verbunden ist, wobei das sich anschließende erste Verkleidungselement starr, also unbeweglich mit dem Holm oder Rahmenelement verbunden ist.

An dem ersten Verkleidungselement ist unmittelbar ein zweites Verkleidungselement angeordnet. Dieses zweite Verkleidungselement ist gelenkig mit dem ersten Verkleidungselement verbunden, wozu analog zu obiger Ausführung ein oder mehrere geeignete Gelenke oder ein Scharnierband ausreichen, bzw. alleine oder in Kombination Gummielement oder -lippen e als Verkleidungselemente eingesetzt werden können. Das Gelenk ist natürlich an die aufzunehmende Last angepasst ausgeführt. An dem zweiten Verkleidungselement kann nun direkt das Verbindungselement angeordnet sein. Möglich ist ein drittes oder noch mehr Verkleidungselemente vorzusehen, welche wie zuvor erwähnt gelenkig miteinander verbunden sind, wobei das zumindest eine Verbindungselement an dem jeweils letzten Verkleidungselement angeordnet ist. Bevorzugt sind aber zwei Verkleidungselemente vorgesehen, welche relativ zueinander beweglich sein sind.

Aufgrund der gelenkigen Verbindung können die Verkleidungselemente aus der verschließenden Position in eine Ruheposition geschwenkt und aufeinander geklappt werden. In der Ruheposition wird der abzuschirmende Spalt, also der Freiraum zwischen den Behandlungsmodulen freigegeben, um z.B. Servicearbeiten oder dergleichen durchzuführen. Hier liegt ein ersichtlicher Vorteil der Erfindung, da die Verkleidung einfach weggeklappt wird, ohne dass ein Verschieben nach oben und ein Arretieren mit weiteren Maßnahmen erforderlich wäre und mit dem Abbau der Module auch vollständig die hieran befestigte Verkleidung entfernt wird, so dass die Behandlungsmaschine optimal zugänglich wird.

Die Verkleidung kann Verkleidungselemente aufweisen, welche in ihren Dimensionen jeweils identisch oder ungleich ausgeführt sein können. So können die Verkleidungselemente bezüglich ihrer Längserstreckung gleich groß oder unterschiedlich groß ausgeführt sein. So kann insbesondere das erste Verkleidungselement bezogen auf die Längserstreckung kürzer sein als das zweite Verkleidungselement. Um die Verkleidung betätigen zu können ist es ausreichend, wenn zumindest eines der Verkleidungselemente, ein Betätigungselement aufweist, welches bevorzugt als Griffstange ausgeführt ist.

Zum lagestabilen Verschließen des Freiraums sind die gegenüber zur Holmbefestigung angeordneten Verbindungselemente und die korrespondierenden Gegenverbindungselemente vorgesehen. Die Verbindungselemente können als Dauermagnet ausgeführt sein. Idealerweise ist das Verbindungselement allerdings als elektrischer Sicherheitsschalter mit Zuhaltung ausgeführt, welcher mittels einer elektrisch anregbaren Spule als Elektromagnet arbeitet, und so eine Verriegelung mit einem Gegenverbindungselement vornehmen. Dabei kann das Gegenverbindungselement einfach ein magnetisierbares Bauteil oder ein Dauermagnet sein.

Grundsätzlich kann es ausreichend sein, wenn lediglich ein einziges Verbindungselement vorgesehen ist, wobei das Gegenverbindungselement dann an entsprechender Position an dem anderen, direkt benachbarten Behandlungsmodul angeordnet sein sollte. In bevorzugter Ausgestaltung ist das Verbindungselement an einem unteren Bereich der Verkleidung angeordnet. Das Gegenverbindungselement kann aber auch an einer entsprechenden Aufnahme angeordnet sein, welche an der Behandlungsanlage angeordnet ist. Die Aufnahme kann dann als Holm ausgeführt sein, welcher auch an dem Behandlungsmodul angeordnet ist, um stirnseitig einen entsprechenden Abschluss in Hochrichtung der Verkleidung gesehen bewirken zu können.

Das Verbindungselement ist in bevorzugter Anordnung so an der freien Stirnseite der Verkleidung oder an einem dort angebrachten Trägerelement des betreffenden Verkleidungselementes angeordnet, dass dieses selbstjustierend ist. Das bedeutet im Sinne der Erfindung, dass das Verbindungselement beweglich an der Verkleidung gelagert ist, was z.B. durch ein entsprechendes Gummilager erreichbar ist, welches zwischen dem Verkleidungselement und dem elektrischen Sicherheitsschalter angeordnet ist. Möglich ist aber auch, wenn der Sicherheitsschalter in einer Aufnahme aufgenommen ist, diese Aufnahme bewegbar an der Verkleidung, also an dem entsprechenden Verkleidungselement anzuordnen. In einer alternativen Ausführung ist nur oder weiterhin das Gegenverbindungselement (8) selbstjustierend gehaltert oder gelagert.

Die Erfindung wird im Folgenden anhand der Figuren an einem Ausführungsbeispiel näher erläutert. Es zeigen:
- Fig. 1: einen Ausschnitt einer Behälterbehandlungsanlage in perspektivischer Ansicht,
- Fig. 2: den Ausschnitt aus Figur 1 in einer Aufsicht,
- Fig. 3: eine Vergrößerung aus Figur 2, zur Darstellung einer Verkleidung in Aufsicht,
- Fig. 4: eine Verkleidung in unterschiedlichen Ausführungen,
- Fig. 5: eine Vergrößerung aus Figur 1, zur Darstellung eines Verbindungselements mit zugehörigem Gegenverbindungselement,
- Fig. 6: ein Verbindungselement als Einzelheit, und
- Fig. 7: Einzelheiten einerseits zur Befestigung an einem Holm, und andererseits mittels eines Verbindungselementes.

In den unterschiedlichen Figuren sind gleiche Teile stets mit denselben Bezugszeichen versehen, weswegen diese in der Regel auch nur einmal beschrieben werden.

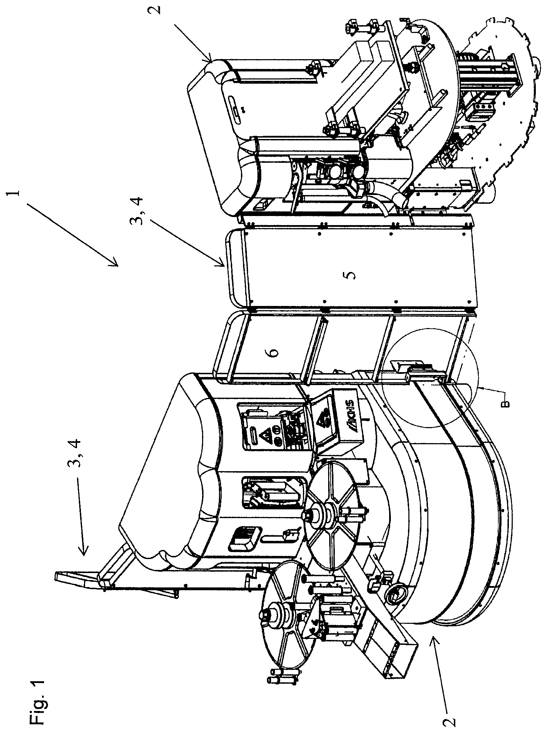

Figur 1 zeigt eine Behälterbehandlungsanlage 1 welche um einen nicht dargestellten Rundläufer herum angeordnete Behandlungsmodule 2 aufweist. Zwischen den Behandlungsmodulen 2, also in deren Freiraum ist ein Abschirmelement 3 angeordnet. Das Abschirmelement 3 ist als mehrteilige Verkleidung 4 mit Verkleidungselementen 5,6 ausgeführt, von denen eines der Verkleidungselemente 5 einseitig mit einem der Behandlungsmodule 2 verbunden ist. Ein anderes Verkleidungselement 6 weist ein Verbindungselement 7 auf, welches mit einem korrespondierenden Gegenverbindungselement 8 zusammenwirkt, welches an einem anderen, direkt benachbarten Behandlungsmodul 2 angeordnet ist.

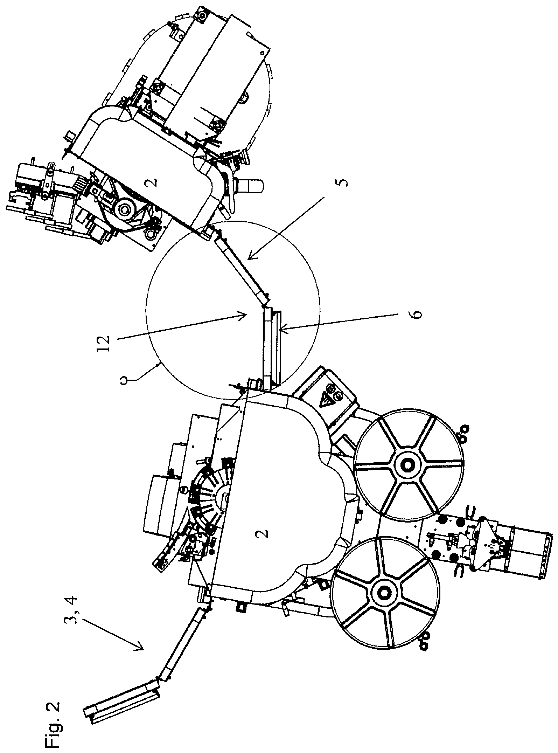

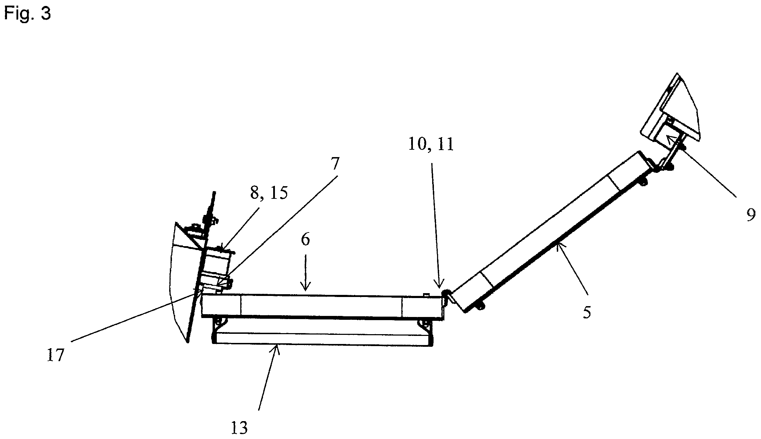

Die Verkleidung 4 ist in ihrer Erstreckung größer ist als der abzuschirmende Freiraum. So weist die Verkleidung 4 quasi eine winklige Anordnung der Verkleidungselemente 5,6 zueinander auf (Figuren 1 bis 3).

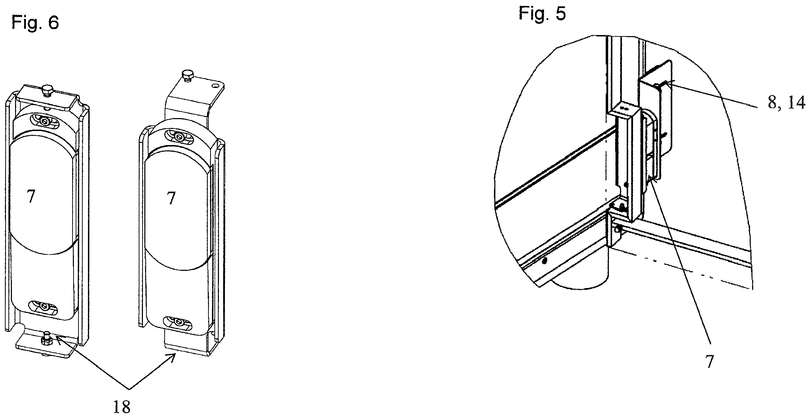

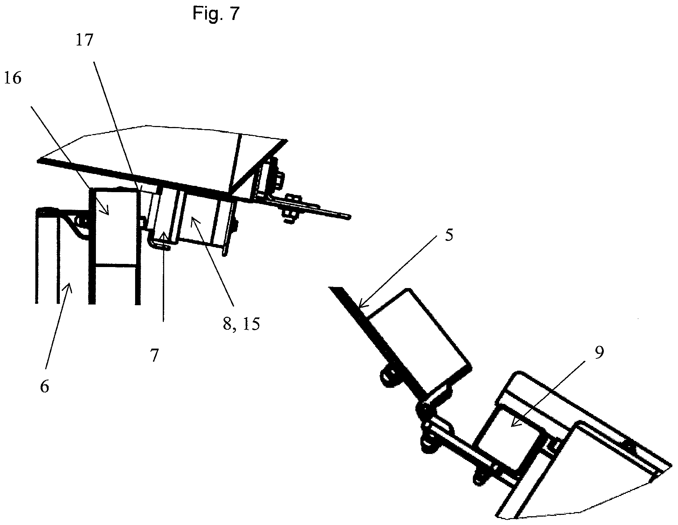

Wie erkennbar (Figuren 1 bis 3) ist die Verkleidung 4 einseitig schwenkbar an dem einen Behandlungsmodul 2 angeordnet ist, wobei das Gegenverbindungselement 8 (Figuren 5 und 7) dann an dem jeweils benachbarten Behandlungsmodul 2 angeordnet ist.

Zur einseitig schwenkbaren Verbindung der Verkleidung 4 mit dem betreffenden Behandlungsmodul 2 ist ein Holm 9 der Verkleidung 4 an dem Behandlungsmodul 2 starr, also fest befestigt, z.B. verschraubt. An den Holm 9 schließt sich ein erstes Verkleidungselement 5 an, welches gelenkig mit dem Holm 9 verbindbar ist. An dem ersten Verkleidungselement 5 ist unmittelbar das zweite Verkleidungselement 6 angeordnet. Dieses zweite Verkleidungselement 6 ist gelenkig mit dem ersten Verkleidungselement 5 verbunden, wozu ein geeignetes Gelenk 10 ausreicht. Dieses kann eine sich über die gesamte Höhe erstreckende Gummilippe 11 sein, welche an den beiden zu verbindenden Verkleidungselementen 5,6 befestigt ist. An dem zweiten Verkleidungselement 6 kann nun direkt das Verbindungselement 7 angeordnet sein. Aufgrund der gelenkigen Verbindung können die Verkleidungselemente 5,6 aus der verschließenden Position 12 in eine Ruheposition geschwenkt und aufeinander geklappt werden.

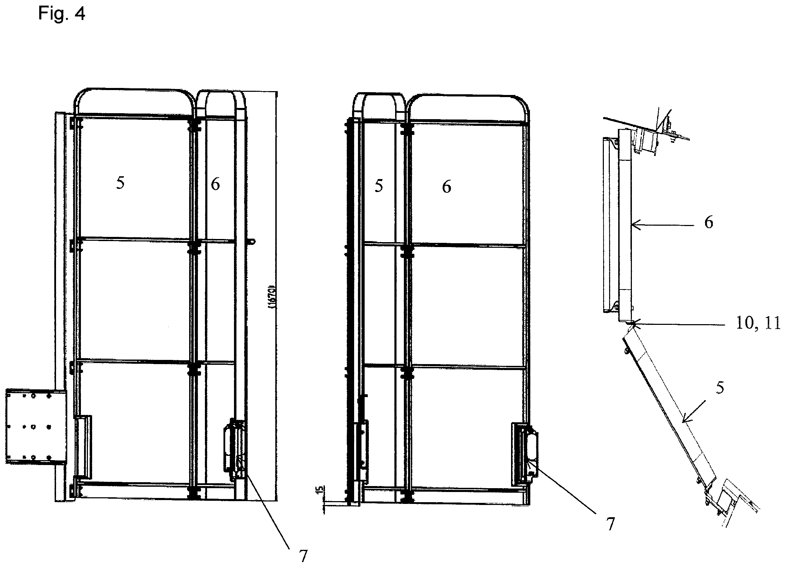

Die Verkleidung 4 kann Verkleidungselemente 5,6 aufweisen, welche in ihren Dimensionen jeweils identisch oder ungleich ausgeführt sein können. So können die Verkleidungselemente 5,6 bezüglich ihrer Längserstreckung gleich groß (Figur 4, rechts in Aufsicht) oder unterschiedlich groß (Figur 4 links und Mitte) ausgeführt sein. So kann insbesondere das erste Verkleidungselement 5 bezogen auf die Längserstreckung kürzer sein als das zweite Verkleidungselement 6 (Figur 4, Mitte), oder das erste Verkleidungselement 5 kann bezogen auf die Längserstreckung länger sein als das zweite Verkleidungselement 6 (Figur 4, links). Das erste Verbindungselement 5 ist im Sinne der Erfindung über den Holm 9 an dem Behandlungsmodul 2 befestigt. Um die Verkleidung 4 betätigen zu können ist es ausreichend, wenn zumindest eines der Verkleidungselemente 5 oder 6, ein Betätigungselement 13 aufweist, welches bevorzugt als Griffstange 13 ausgeführt ist. Bei dem in den Figuren 1 bis drei gezeigten Ausführungsbeispiel weist das zweite Verkleidungselement 6 die Griffstange 13 auf.

Dabei ist vorteilhafterweise der Holm 9 oder die modulseitige Lagerung ggf. mit einem vertikal dazu angeordneten Lager an der oberen Umfangsperipherie der Behälterbehandlungsmaschine 1 die einzige Lagerung und Führung der Verkleidung 4 bei bzw. für den Schwenkvorgang.

Zum lagestabilen Verschließen des Freiraums ist das gegenüber zur Holmbefestigung angeordnete Verbindungselement 7 und das korrespondierende Gegenverbindungselement 8 vorgesehen. Das Verbindungselement 7 ist beispielhaft als elektrischer Sicherheitsschalter ausgeführt. Grundsätzlich kann es ausreichend sein, wenn lediglich ein einziges Verbindungselement 7 vorgesehen ist, wobei das Gegenverbindungselement 8 dann an entsprechender Position an dem anderen, direkt benachbarten Behandlungsmodul 2 angeordnet sein sollte, wie in den Figuren 5 bis 7 am besten erkennbar ist. In beispielhafter Ausgestaltung ist das Verbindungselement 7 an einem unteren Bereich der Verkleidung 4 angeordnet. In Figur ist das Gegenverbindungselement 8 als Winkel 14 ausgeführt, welcher magnetisch ist. Das Gegenverbindungselement 8 kann aber auch an einer entsprechenden Aufnahme 15 angeordnet sein, welche an der Behandlungsanlage 2 angeordnet ist. Die Aufnahme 15 kann dann als Holm 15 ausgeführt sein, welcher auch an dem Behandlungsmodul 2 angeordnet ist, um stirnseitig einen entsprechenden Abschluss in Hochrichtung der Verkleidung 4 gesehen bewirken zu können (Figur 7). Da das Verbindungselement 7 günstiger Weise als elektrischer Sicherheitsschalter ausgeführt ist, kann das Gegenverbindungselement 8 also auch einfach als magnetisierbarer Abschnitt oder Dauermagnet am Holm 15 ausgeführt sein (Figur 7).

Das Verbindungselement 7, also der Sicherheitsschalter ist in bevorzugter Anordnung so an der freien Stirnseite 16 der Verkleidung 4, als an der freien Stirnseite 16 des betreffenden Verkleidungselementes 6 angeordnet, dass dieses selbstjustierend ist. Das bedeutet im Sinne der Erfindung, dass das Verbindungselement 7 beweglich an der Verkleidung 4 gelagert ist, was z.B. durch ein entsprechendes Gummilager 17 erreichbar ist, welches zwischen dem Verkleidungselement 6 und dem elektrischen Sicherheitsschalter angeordnet ist. Möglich ist aber auch, wenn der Sicherheitsschalter in einer Aufnahme 18 aufgenommen ist, diese Aufnahme 18 bewegbar an der Verkleidung 4, also an dem entsprechenden Verkleidungselement 6 anzuordnen. In Figur 6 sind Aufnahmen 18 dargestellt welche in unterschiedliche Weise beweglich mit dem betreffenden Verkleidungselement 6 verbindbar sind.

Durch ein Wegklappen oder Verschwenken der Verkleidungselemente 5, 6 ist der Freiraum vollständig geöffnet. Auch durch eine Demontage kann der Freiraum vollständig geöffnet werden, wozu nur die Holmbefestigung gelöst werden muss. Werden die Behandlungsmodule 2 ausgetauscht, oder in Umfangsrichtung gesehen versetzt, ist ein weiterer Vorteil der Verkleidung 4 ersichtlich, da diese in ihrer Erstreckung größer ist als der Freiraum, weswegen die Verkleidungselemente 5, 6 winklig zueinander angeordnet sind. So kann auch bei geändertem Freiraummaß, immer noch eine sichere Abschirmung erreicht werden. Selbstverständlich sind mehrere Verkleidungselemente 4 um den Drehtisch herum angeordnet, so dass die Behälterbehandlungsanlage 1 vollständig abgeschirmt ist. Die Behandlungsmodule können als Wechselmodule ausgeführt sein, wie bereits erwähnt, wobei die Verkleidungen 4 entweder abmontiert werden und an das neue Wechselmodul montiert werden können. Denkbar ist aber auch, dass die Verkleidungen an dem jeweiligen Wechselbehandlungsmodul 2 verbleiben. Dies spart Montage- und Demontagezeit. Die Verkleidungen 4 mit ihren Verkleidungselementen 5, 6 sind bevorzugt durchsichtig, wobei Makrolon® oder Plexiglas® Verwendung finden kann

### Bezugszeichenliste

- 1: Behälterbehandlungsanlage
- 2: Behandlungsmodul
- 3: Abschirmelement
- 4: Verkleidung
- 5: Erstes Verkleidungselement
- 6: Zweites Verkleidungselement
- 7: Verbindungselement
- 8: Gegenverbindungselement
- 9: Holm
- 10: Gelenk
- 11: Gummilippe
- 12: Verschließende Position
- 13: Betätigungselement/Griffstange
- 14: Winkel
- 15: Holm
- 16: Stirnseite
- 17: Gummilager
- 18: Aufnahme

## Patentansprüche

1. Behälterbehandlungsanlage, welche als Rundläufer ausgeführt ist, an deren peripherem Umfang Behandlungsmodule (2) angeordnet sind, um Behälter zu behandeln, wobei
zumindest ein im Freiraum zwischen benachbarten Behandlungsmodulen (2) angeordnetes Abschirmelement (3, 4) vorgesehen ist, wobei ferner
das Abschirmelement (3, 4) als mehrteilige Verkleidung (4) mit Verkleidungselementen (5, 6) ausgeführt ist, wobei weiter
mindestens ein erstes der Verkleidungselemente (5) auf oder an einem der Behandlungsmodule (2) gelagert und hiermit verbunden ist, und wobei
ein anderes Verkleidungselement (6) zumindest ein Verbindungselement (7) aufweist, welches mit einem korrespondierenden Gegenverbindungselement (8) zusammenwirkt, welches an der Behälterbehandlungsanlage (1) oder an einem anderen, direkt benachbarten Behandlungsmodul (2) angeordnet ist, **dadurch gekennzeichnet, dass**
- das erste der mehreren Verkleidungselemente (5) auf oder an einem der Behandlungsmodule (2) schwenkbar gelagert und unmittelbar gelenkig mit einem zweiten Verkleidungselement verbunden ist und dadurch
- aus einer den Freiraum verschließenden Position in eine Ruheposition geschwenkt und aufeinander geklappt werden können, so dass der Freiraum in der Ruhelage freigegeben wird, um z.B. Servicearbeiten oder dergleichen durchzuführen, wobei
- die Verkleidung (4) in ihrer Erstreckung größer ist als ein abzuschirmender Freiraum und eine winklige Anordnung der Verkleidungselemente (5, 6) zueinander aufweist, und wobei
- die Verkleidung (4) einseitig schwenkbar an dem Behandlungsmodul (2) angeordnet ist.

2. Behälterbehandlungsanlage nach Anspruch 1, **dadurch gekennzeichnet, dass** ein Holm (9) der Verkleidung (4) an dem Behandlungsmodul (2) angeordnet ist, wobei ein erstes Verkleidungselement (5) gelenkig mit dem Holm (9) verbindbar ist.

3. Behälterbehandlungsanlage nach Anspruch 1 oder 2, **dadurch gekennzeichnet, dass** ein Gelenk (10) zwischen benachbarten Verkleidungselementen (5, 6) als Gummilippe (11) ausgeführt, welche an den Verkleidungselementen (5, 6) befestigt ist.

4. Behälterbehandlungsanlage nach einem der vorhergehenden Ansprüche, **dadurch gekennzeichnet, dass** die Verkleidung (4) aus einer verschließenden Position (12) in eine Ruheposition und zurück schwenkbar ist.

5. Behälterbehandlungsanlage nach einem der vorhergehenden Ansprüche, **dadurch gekennzeichnet, dass** das Verbindungselement (7) als elektrischer Sicherheitsschalter mit Zuhaltung ausgeführt ist, wobei das Gegenverbindungselement (8) als magnetischer oder magnetisierbarer Winkel (14) und/oder Holm (15) ausgeführt ist.

6. Behälterbehandlungsanlage nach einem der vorhergehenden Ansprüche, **dadurch gekennzeichnet, dass** das Verbindungselement (7) als Dauermagnet ausgeführt ist, wobei das Gegenverbindungselement (8) als magnetischer oder magnetisierbarer Winkel (14) und/oder Holm (15) ausgeführt ist.

7. Behälterbehandlungsanlage nach einem der vorhergehenden Ansprüche, **dadurch gekennzeichnet, dass** das Verbindungselement (7) an einem unteren Bereich der Verkleidung bzw. des Verkleidungselementes (6) angeordnet ist.

8. Behälterbehandlungsanlage nach einem der vorhergehenden Ansprüche, **dadurch gekennzeichnet, dass** das Verbindungselement (7) und/oder wobei das Gegenverbindungselement (8) selbstjustierend ist.

## Claims

1. Container-processing installation, which is configured in circulating form and on the peripheral circumference of which processing modules (2) are arranged for the processing of containers, wherein
at least one screening element (3, 4) is provided arranged in the free space between adjacent processing modules (2), wherein further
the screening element (3, 4) is configured as a multi-part panelling arrangement (4) with panelling elements (5, 6), wherein further
at least one first element of the panelling elements (5) is mounted on or at one of the processing modules (2) and thereby connected, and wherein
another panelling element (6) comprises at least one connecting element (7), which interacts with a corresponding mating connecting element (8) arranged on the container-processing installation (1) or on the other directly adjacent processing module (2), **characterised in that**
- the first of the plurality of panelling elements (5) is mounted on or at one of the processing modules (2) such as to be pivotable, and is connected directly in a jointed manner to a second panelling element, and consequently
- they can be pivoted out of a position closing off the free space into a position of rest and can be folded onto one another, such that, in the position of rest, the free space is exposed, in order, for example, for servicing work or the like to be carried out, wherein
- the panelling (4) is larger in its extension than a free space which is to be screened, and exhibits an angled arrangement of the panelling elements (5, 6) in relation to one another, and wherein
- the panelling (4) is arranged such as to be pivotable on one side at the processing module (2).

2. Container-processing installation according to claim 1, **characterised in that** a spar (9) of the panelling (4) is arranged at the processing module (2), wherein a first panelling element (5) can be connected by a joint to the spar (9).

3. Container-processing installation according to claim 1 or 2, **characterised in that** a joint (10) between adjacent panelling elements (5, 6) is configured as a rubber lip (11), which is secured to the panelling element (5, 6).

4. Container-processing installation according to any one of the preceding claims, **characterised in that** the panelling (4) can be pivoted out of a closing position (12) into a position of rest, and back again.

5. Container-processing installation according to any one of the preceding claims, **characterised in that** the connecting element (7) is configured as an electrical safety switch with a holding device, wherein the mating connecting element (8) is configured as a magnetic or magnetisable angle element (14) and/or spar (15).

6. Container-processing installation according to any one of the preceding claims, **characterised in that** the connecting element (7) is configured as a permanent magnet, wherein the mating connecting element (8) is configured as a magnetic or magnetisable angle element (14) and/or spar (15).

7. Container-processing installation according to any one of the preceding claims, **characterised in that** the connecting element (7) is arranged in a lower region of the panelling or the panelling element (6) respectively.

8. Container-processing installation according to any one of the preceding claims, **characterised in that** the connecting element (7) is self-adjusting and/or wherein the mating connecting element (8) is self-adjusting.

## Revendications

1. Machine de traitement de contenants, laquelle est réalisée sous la forme d'une machine rotative, au niveau du contour périphérique de laquelle des modules de traitement (2) sont disposés pour traiter des contenants, dans laquelle
au moins un élément de protection (3, 4) disposé dans l'espace dégagé entre des modules de traitement (2) adjacents est prévu, dans laquelle en outre
l'élément de protection (3, 4) est réalisé sous la forme d'un habillage (4) en plusieurs parties avec des éléments d'habillage (5, 6), dans laquelle par ailleurs
au moins un premier des éléments d'habillage (5) est monté sur ou au niveau d'un des modules de traitement (2) et relié à celui-ci, et dans laquelle
un autre élément d'habillage (6) présente au moins un élément de liaison (7), lequel coopère avec un contre-élément de liaison (8) correspondant, lequel est disposé au niveau de l'installation de traitement de contenants (1) ou au niveau d'un autre module de traitement (2) directement adjacent, **caractérisée en ce que**
- le premier des plusieurs éléments d'habillage (5) est monté de manière à pouvoir pivoter sur ou au niveau d'un des modules de traitement (2) et est relié directement de manière articulée à un deuxième élément d'habillage et
- ils peuvent être pivotés ainsi d'une position fermant l'espace dégagé à une position de repos et rabattus les uns sur les autres de sorte que l'espace dégagé soit dégagé dans la position de repos pour réaliser par exemple des opérations de maintenance ou similaires, dans laquelle
- l'habillage (4) est, dans son extension, plus grand qu'un espace dégagé à protéger et présente un agencement selon un angle des éléments d'habillage (5, 6) les uns par rapport aux autres, et dans laquelle
- l'habillage (4) est disposé d'un côté de manière à pouvoir pivoter au niveau du module de traitement (2).

2. Installation de traitement de contenants selon la revendication 1, **caractérisée en ce qu'**un montant (9) de l'habillage (4) est disposé au niveau du module de traitement (2), dans laquelle un premier élément d'habillage (5) peut être relié de manière articulée au montant (9).

3. Installation de traitement de contenants selon la revendication 1 ou 2, **caractérisée en ce qu'**une articulation (10) entre des éléments d'habillage (5, 6) adjacents est réalisée sous la forme d'une lèvre en caoutchouc (11), laquelle est fixée aux éléments d'habillage (5, 6).

4. Installation de traitement de contenants selon l'une quelconque des revendications précédentes, **caractérisée en ce que** l'habillage (4) peut être pivoté d'une position de fermeture (12) à une position de repos, et inversement.

5. Installation de traitement de contenants selon l'une quelconque des revendications précédentes, **caractérisée en ce que** l'élément de liaison (7) est réalisé sous la forme d'un interrupteur de sécurité électrique avec une gâchette, dans laquelle le contre-élément de liaison (8) est réalisé sous la forme d'un angle (14) et/ou d'un montant (15) magnétique ou magnétisable.

6. Installation de traitement de contenants selon l'une quelconque des revendications précédentes, **caractérisée en ce que** l'élément de liaison (7) est réalisé sous la forme d'un aimant permanent, dans laquelle le contre-élément de liaison (8) est réalisé sous la forme d'un angle (14) et/ou d'un montant (15) magnétique ou magnétisable.

7. Installation de traitement de contenants selon l'une quelconque des revendications précédentes, **caractérisée en ce que** l'élément de liaison (7) est disposé au niveau d'une zone inférieure de l'habillage ou de l'élément d'habillage (6).

8. Installation de traitement de contenants selon l'une quelconque des revendications précédentes, **caractérisée en ce que** l'élément de liaison (7) et/ou dans laquelle le contre-élément de liaison (8) sont auto-ajustables.
